# EUROPEAN PATENT APPLICATION

(11) **EP 3 566 896 A1**
(43) Date of publication of application: **13.11.2019**
(21) Application number: 18465525.6
(22) Date of filing: 09.05.2018
(51) Int. Cl.: B60L 11/18

(54) **VEHICLE WITH AN INDUCTIVE CHARGING SYSTEM, SUPPLY UNIT FOR SUCH A VEHICLE AND METHOD FOR CHARGING SUCH A VEHICLE**

(71) Applicant: Continental Automotive GmbH, 30165 Hannover (DE)
(72) Inventor: Dumitru, Aurel, 307160 Dumbravita (RO)

(57) **Abstract**

The invention is concerned with a vehicle (1) with a charging system (2) comprising an electromagnetic transformer element (3), designed to generate a charging voltage (VC) from an alternating magnetic field (H), wherein the magnetic field (H) is received at at least one outer contact surface (4), and comprising a charging circuit (5) that is designed to charge a battery (6) of the vehicle by means of the charging voltage (VC) . The invention is characterized in that the at least one outer contact surface (4) is facing in a forward (f) or rearward (r) driving direction of the vehicle (1).

## Description

The invention is concerned with a vehicle with an inductive charging system, a supply unit for such a vehicle and a method for charging such a vehicle.

Inductive charging systems for electric vehicles usually comprise a supply coil sited on or in the pavement. In order to charge a battery of a vehicle, this supply coil generates an alternating magnetic field. Before an inductive charging process starts, the vehicle has to be arranged above the coil. The vehicle has to be set in a predefined position to let the alternating magnetic field flow through a charging coil of the vehicle. To achieve a needed energy transfer efficiency, an air gap between the charging coil of the vehicle and the supply coil has to be below a distance of 15 cm. This restricts design options related to the arrangement of the charging coil in the vehicle, because the coil has to be placed at the bottom of the vehicle. As a consequence the ground clearance of the vehicle may be reduced to meet the necessary distance between the coils. Especially sport utility vehicles and land machines are affected by this limitation. As a consequence the vehicle may not be compatible to a specific charging system.

Another problem arises from the fact that cross-sectional areas of the two coils have to overlap to minimize the magnetic leakage flux during charging. The lateral mismatch between the coils must not exceed a distance of 10 cm to a predefined position. As the arrangement of the coils is not visible to a driver, special equipment or advanced driver skills are necessary to achieve a needed horizontal congruence of the cross-sectional areas.

Problems may arise from the position of the coils. The air gap between the coils has to be monitored by sensors and expensive hardware. When an object is recognized in the gap, the hardware stops the charging process.

It is an object of the present invention to improve the efficiency of an inductive charging system.

The object is accomplished by the subject matter of the independent claims. Advantageous developments with convenient and non-trivial further embodiments of the invention are specified in the following description, the dependent claims and the figures.

The invention provides a vehicle with a charging system comprising an electromagnetic transformer element, designed to generate a charging voltage from an alternating magnetic field, wherein the magnetic field is received at at least one outer contact surface, and comprising a charging circuit that is designed to charge a battery of the vehicle by means of the charging voltage, characterized in that the at least one outer contact surface is facing in a forward or a rearward driving direction of the vehicle.

In other words the vehicle comprises the charging system, wherein the charging system incorporates the electromagnetic transformer element for transforming the alternating magnetic field into the charging voltage. The electromagnetic transformer element comprises the at least one outer contact surface oriented in the forward or rearward driving direction of the vehicle. The at least one outer contact surface is intended to receive the alternating magnetic field. In order to charge the battery by the charging voltage induced in the electromagnetic transformer element by the alternating magnetic field. The charging system comprises the charging circuit to perform the charging of the battery.

The advantage of the invention is the fact, that the ground clearance of the vehicle is not reduced by the charging system.

As an example, the vehicle may be an electric or hybrid electric car comprising the battery. The battery may be a lithium ion battery. The charging circuit may comprise components necessary to charge the battery, like a charging regulator, a charging state sensor or a voltage converter. The charging system comprises the electromagnetic transformer element. The electromagnetic transformer element may comprise one or more induction coils, made of e.g. copper. The electromagnetic transformer element may be designed as a flat coil winding enclosing a core area with or without a soft-magnetic core element. The at least one outer contact surface may be arranged in the core area. As an alternative, the electromagnetic transformer element may comprise a coil linked to the at least one surface area by means of a soft magnetic core element. The coil may, surround a part of a horseshoe shaped soft-magnetic core element, wherein at least one end plane of the horseshoe shaped soft-magnetic core element is the at least one outer contact surface. Soft-magnetic means that the coercivity is below 1000 A/m. The magnetic core element may be a ferrite or another magnetic element. The end of the magnetic core element may face towards the forward or rearward driving direction of the vehicle. The electromagnetic transformer element may be designed to generate the charging voltage by the alternating magnetic field flowing through the core of the coil of the electromagnetic transformer element. The electromagnetic transformer element may be placed under a plastic front mask of the vehicle. A respective normal vector of the at least one outer contact surface and a horizontal vector, facing towards a forward or rearward driving direction of the vehicle, may form an angle below 45 degrees.

The invention also comprises embodiments that yield additional advantages.

In one embodiment, the charging system comprises a positioning unit, designed to move the electromagnetic transformer element to an alternative position inside the vehicle. In other words, the positioning unit of the charging system is set to dispose the transformer element to the alternative position in the vehicle.

This embodiment has the advantage that the position of the transformer element may be adjusted to comply with a corresponding supply unit.

It may be possible, that the positioning unit contains an actuator, which is designed to switch the electromagnetic transformer element between two positions, wherein the first position is a standard position and the second position is the alternative position. Each of the two positions may comply with demands of a specific charging standard.

In one embodiment, the positioning unit is designed to move the electromagnetic transformer element in a translatory direction. In other words, the positioning unit is designed to change the position of the electromagnetic transformer element by performing a translatory motion of the electromagnetic transformer element. This has the advantage that the positioning unit may move the electromagnetic transformer element to reduce the air gap in front of the at least one outer contact surface. It may be possible, that the positioning unit is a motorized linear translation stage designed to move the electromagnetic transformer element in a horizontal or vertical direction without changing the orientation of the electromagnetic transformer element.

In one embodiment, the positioning unit is designed to move the transformer element rotationally around a horizontal axis. In other words, the positioning unit is designed to change the position of the electromagnetic transformer element by rotating the electromagnetic transformer element around the horizontal axis. This has the advantage that the electromagnetic transformer element may be arranged to receive an alternating magnetic field from a vertical or a horizontal direction. It may be possible, that the positioning unit contains a rotary table actuator, wherein the electromagnetic transformer element is placed on the rotary table actuator.

In one embodiment, the at least one outer contact surface is facing towards a downward direction of the vehicle, when the transformer element is arranged in the alternative position. In other words, a normal vector of the at least one outer contact surface is oriented to the ground under the bottom of the vehicle, when the electromagnetic transformer element is arranged in the alternative position. This has the advantage that the charging system is suitable for standards using a vertical magnetic field as well as for standards using a horizontal magnetic field. It may be possible, that the electromagnetic transformer element may be rotated to the alternative position, so that the at least one outer contact surface is in parallel to a surface under the vehicle. This may allow an inductive charging with an alternating magnetic field of a planar coil in the ground.

In one embodiment, the charging system comprises a control unit designed to drive the vehicle to a predefined charging position related to an electromagnetic transformer supply element of a supply unit outside the vehicle. In other words, the control unit of the charging system is designed to navigate the vehicle to the predefined charging position with or without an input of the driver of the vehicle. The predefined charging position is located at a place situated at a specific configuration with respect to the magnetic transformer supply element of the supply unit. The supply unit is a device outside the vehicle, designed to provide energy to the vehicle. This embodiment gives the advantage, that no or few input of the driver is necessary to arrange the vehicle in the predefined charging position. It may be possible, that the control unit comprises sensors designed to perceive the environment of the vehicle and a microprocessor. The microprocessor may be designed to identify the supply unit in the environment perceived by the sensors. The microprocessor may locate the predefined charging position and calculate a way to navigate the vehicle to the predefined charging position. The microprocessor may navigate the vehicle to the predefined charging position along the calculated way.

As a further embodiment, the charging system comprises a shock absorbing element in front of the at least one outer surface. In other words the charging system comprises a device, designed to absorb mechanical energy of a mechanical shock. This gives the advantage, that mechanical energy may be absorbed, when the vehicle touches the supply unit. The shock absorbing element may comprise damping elements or shock absorbing materials, arranged around the at least one outer contact surface.

As a further embodiment, the charging system comprises the mechanical interlocking unit, designed to interlock the vehicle to a supply unit. In other words, the vehicle comprises the mechanical interlocking unit that is designed to hold the vehicle at the supply unit. This has the advantage that a rearrangement of the vehicle can be prevented during a charging process. As an example, the vehicle can comprise hooks to attach the vehicle to the charging unit. The charging system may comprise the mechanical interlocking unit to interlock the vehicle at the predefined charging position

As a further embodiment, the charging system is designed to provide an alternating or constant magnetic field from a supporting voltage provided by the battery at the at least one outer contact surface in dependence on a trigger signal. In other words, the charging system is designed to generate an alternating or constant magnetic field. The magnetic field is provided at the at least one outer contact surface and is generated by the supporting voltage of the battery. This gives the advantage that a magnetic field may be provided by the vehicle. As an example, the charging system may be designed to generate an alternating magnetic field to charge a device placed in front of the at least one outer contact surface. To induce the magnetic field, the charging system may be designed to receive the supporting voltage from the battery.

As a further embodiment, the charging system comprises a communication device designed to coordinate a charging process with another vehicle or the supply unit. In other words, the charging system is designed to perform the charging process, wherein the coordination is performed by a communication device designed communicate with the other vehicle. This has the advantage, that the charging system may demand energy from another vehicle or from the supply unit. The charging system may comprise an LTE-antenna system to send signals to the other vehicle or the supply unit. The signals may include data about a charging state the battery. The signals may comprise requests to perform a charging process in order to charge the battery.

As a further embodiment the charging system comprises a vehicle detector designed to detect the other vehicle, wherein the charging system is designed to provide a constant magnetic field opposing to a constant magnetic field of the other vehicle, when the other vehicle is approaching from a predefined direction and or with a predefined speed. In other words, the charging system is designed to detect another vehicle using the vehicle detector and to provide the constant magnetic field, when the other vehicle is approaching the vehicle from the predefined direction and/or with the predefined speed. The constant magnetic field is reversed to the constant magnetic field of the other vehicle. This gives the advantage, that a repulsive field is created when the other vehicle is approaching. It may be possible, that the detector detects the other vehicle that is approaching the vehicle in the front direction. The speed of the other vehicle may be above the predefined value. In order to decelerate the other vehicle, the charging system may generate the reverse constant magnetic field which may be reversed to the magnetic field of the other vehicle to generate a repulsive force between the two vehicles.

As a further embodiment the charging system comprises a road surface sensor designed to determine the type of road surface, wherein the charging system is designed to provide the magnetic field when the vehicle is situated on a predefined type of road surface. In other words the charging system is designed to detect the type of road surface and to generate the magnetic field when the vehicle is placed on the predefined road surface. This gives the advantage that the charging system can improve the traction of the vehicle on the road. As an example, the magnetic field can be generated, when the road surface sensor detects a road surface containing magnetic materials or coils to increase the traction of the vehicle. The field may be generated, when the road is wet or icy. The road surface sensor may be designed as an optical sensor, or as a sensor to detect the magnetic characteristic of the road surface.

The invention provides a supply unit comprising an electromagnetic transformer supply element, designed to generate an alternating magnetic field, wherein the magnetic field is provided at at least one supply contact surface. The at least one supply contact surface is facing towards a horizontal direction. In other words the supply unit is designed to provide energy through an alternating magnetic field, wherein the magnetic field flows through the at least one supply contact surface. The at least one supply contact surface is vertically aligned, meaning its normal is oriented in a horizontal direction. This gives the advantage, that a distance between the at least one supply contact surface and a contact surface of a vehicle has to be reduced in a horizontal direction, which is easier said a reduction in vertical direction. For example the supply unit may be built behind or inside a wall in a garage. The supply unit may comprise a battery to store energy. The at least one supply contact surface may be provided by a core cross-section of a coil. The core cross-section may be oriented in a horizontal direction. The at least one supply contact surface may be placed in a predefined charging position, wherein the at least one supply contact surface is arranged face-to-face to a contact surface of a vehicle parked in the garage. The supply unit may comprise a shock absorbing element to absorb mechanical energy.

The invention comprises a method for charging a vehicle. In a first step the vehicle is driven to a predefined charging position related to a supply electromagnetic transformer element of a supply unit outside the vehicle by a control unit. In the next step an alternating magnetic field at at least one supply contact surface of the supply unit is provided, wherein the at least one supply contact surface is facing towards a horizontal direction. In the next step, at least one outer contact surface of an electromagnetic transformer element of the vehicle is receiving the alternating magnetic field. The at least one outer contact surface of the vehicle is facing towards a forward or rearward driving direction of the vehicle. In a next step the transformer element of the vehicle is generating a charging voltage from the alternating magnetic field. In a last step, a battery of the vehicle is charged by a charging circuit by means of the charging voltage.

In other words in a first step, the control unit navigates the vehicle to the predefined charging position, wherein the charging position is defined by a predefined relation to the supply electromagnetic transformer element of the supply unit. The supply unit is placed outside the vehicle. In a next step, the supply unit generates the alternating magnetic field to transfer energy to the vehicle. A normal of the at least one supply contact surface is aligned in a horizontal direction. In a next step, the alternating magnetic field is flowing through the at least one outer contact surface of the electromagnetic transformer element of the vehicle. The at least one outer contact surface of the vehicle has a normal aligned in forward or rearward direction of the vehicle. The supply contact surface and the outer contact surface are arranged face-to-face. The alternating magnetic field induces a charging voltage in the transformer element of the vehicle. The charging circuit uses the charging voltage to charge the battery of the vehicle.

The invention gives the advantage that an inductive charging process is provided, wherein the positioning of the vehicle is easier to perform.

As an example, the charging unit may be a coil with a core element, placed behind or inside a wall of a garage. The control unit of the vehicle may be a microprocessor or microcontroller. The microprocessor may navigate the vehicle to the predefined position. The predefined charging position may depend on a predefined distance between the at least one supply contact surface of the supply unit and the at least one contact surface of the vehicle. In the predefined charging position, the at least one supply contact surface of the supply unit may be in the face of the at least one contact surface of the vehicle. The supply unit may provide the alternating magnetic field, wherein the alternating magnetic field is flowing through the at least one supply contact surface the supply unit and the at least one outer contact surface of the vehicle. The alternating magnetic field may induce the charging voltage in the electromagnetic transformer element of the vehicle. The charging circuit may use the charging voltage to charge the battery of the vehicle.

The invention also comprises embodiments that provide features which afford additional technical advantages.

In the following an exemplary implementation of the invention is described. The figures show:
Fig. 1 a schematic illustration of an embodiment of the inventive vehicle;
Fig. 2 a schematic illustration of an embodiment of the inventive vehicle at the predefined charging position;
Fig. 3 a schematic illustration of an embodiment of the inventive vehicle with an electromagnetic transformer element in an alternative position;
Fig. 4 a schematic illustration of an embodiment of the inventive vehicle on a magnetic road surface;
Fig. 5 a schematic illustration of an embodiment of the inventive vehicle on a magnetic road surface;
Fig. 6 a schematic illustration of an embodiment of two inventive vehicles;
Fig. 7 a schematic illustration of an embodiment of the inventive supply unit;
Fig. 8 a schematic illustration of a charging process.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

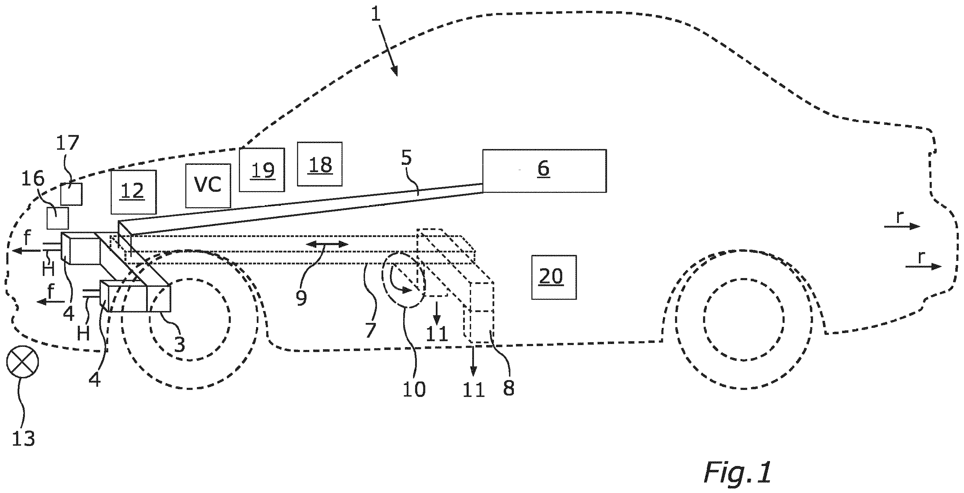

Fig. 1 shows a schematic illustration of an embodiment of the inventive vehicle. The vehicle 1 may be an electric or a hybrid electric vehicle. The vehicle may comprise the charging system 2. The charging system 2 may comprise the electromagnetic transformer element 3, which may be an induction coil with a core element. The electromagnetic transformer element 3 may comprise the at least one outer contact surface 4. The charging system 2 may comprise the charging circuit 5, designed to charge a battery 6 of the vehicle 1. The outer contact surfaces 4 may face towards the forward f or rearward r driving direction of the vehicle 1. The charging system may comprise the positioning unit 7, designed to move the electromagnetic transformer element 3 to the alternative position 8 inside the vehicle 1. The positioning unit 7 may be designed to move the transformer element 3 in the translatory direction 9 or rotationally around the horizontal axis 10. When the electromagnetic transformer element 3 is arranged in the alternative position 8, the outer contact surfaces 4 may face towards a downward direction 11 of the vehicle. The charging system 2 may comprise a control unit 12. The control unit 12 may be designed to drive the vehicle to the predefined charging position 13 related to the electromagnetic transformer supply element 14 of the supply unit 15 outside the vehicle 1. The charging system 2 may comprise the vehicle detector 19 designed to detect another vehicle 1 comprising the charging system 2. The vehicle may comprise the shock absorbing element 16 in front of the outer contact surface 4 to prevent the vehicle from being damaged in case of an accident during a charging process. The shock absorbing element 16 may be a mechanical damping unit or a soft damping material. The vehicle 1 may comprise a mechanical interlocking unit 17 designed to interlock the vehicle 1 to the supply unit 15 in the predefined charging position 13. The charging system 2 may comprise the communication device 18 designed to coordinate a charging process with another vehicle. The communication device 18 may be designed to communicate using LTE and/or GSM. The charging system 2 may comprise the surface sensor 20 to detect a characteristic and a magnetic behavior of a surface under the vehicle 1. The electromagnetic transformer element 3 may receive the alternating magnetic field H, which may induce a charging voltage VC. The charging voltage VC may be used by the charging circuit 5 to charge the battery 6.

The innovation consists primary in the position of the electromagnetic transformer element 3 that can be a coil:
In front of the car, under the plastic front mask of the car. This makes also the coil from supply equipment to be vertical on a wall or a pole.
Secondary the coil should be able to change the position from front of the car to bottom in order to achieve other functionalities. This movement shall be performed with a slow motor and the primary vertical position (in front of the car) and the secondary horizontal position (below the car) to be secured mechanically.

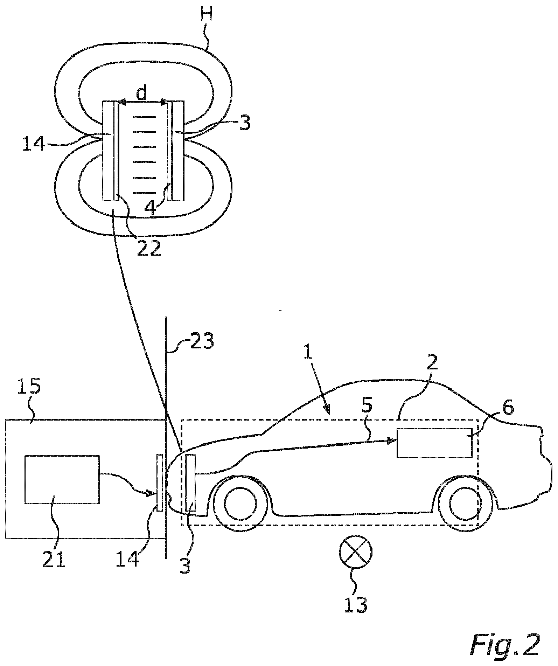

From the front and vertical position of the car coil three advantages can arise:
1) Maximizing the energy transfer efficiency because the distance between the car coil and supply equipment coil could be minimized close to 0 cm if the front of the car touches the wall. Here are some variability in implementation for reaching this 0 cm range:
   a. driver skills with the help of some passive shock absorbers in the supply equipment plate in order to absorb energy of impact at low speed (FIG2). As this kind of manoeuvres are usual for the drivers, they can be learned very fast.
   b. active energizing of both coils: constant on vehicle coil and variable on supply equipment coil using the magnetic field force to drag the car close to the charging coil. Here is required a close loop adaptation of magnetic field depending on the vehicle speed and distance to the coil.
   This 0 cm distance cannot be achieved using the under car coils.
2) Making unnecessary the monitoring of air gap between the coils during charging (the distance between the car coil and supply equipment coil could be minimized close to 0 cm so no air gap). As this is a very complex topic in case of placing the coil under the car, this could simplify very much the concept, cost and issues.
As the coils are vertically, the foreign objects cannot stand gravitationally on them as in case of horizontal coils and at the same time, because the both coils are in front of the car, the driver have the visibility when approaching if something is placed in between (not the case if something is under the car).

Fig. 2 shows a schematic illustration of an embodiment of the inventive supply unit. The figure shows the supply unit 15 which may comprise the supply battery 21 and the electromagnetic transformer supply element 14 the electromagnetic transformer supply element 14 may comprise the supply contact surface 22 which may be arranged in face to the outer contact surface 4 of the electromagnetic transformer element 3 of the vehicle 1. The electromagnetic transformer supply element 14 may provide the alternating magnetic field H. The distance d between the supply contact surface 22 and the outer contact surface 4 of the vehicle may be below 10 cm, when the vehicle is arranged in the predefined charging position 13. During the charging, the charging circuit 5 may charge the battery 6 of the vehicle 1 using the charging voltage VC, induced by the alternating magnetic field H. The supply unit may be placed behind the wall 23. During the charging process, the interlocking unit 17 of the vehicle 1 to may interlock the vehicle 1 to the supply unit 15.

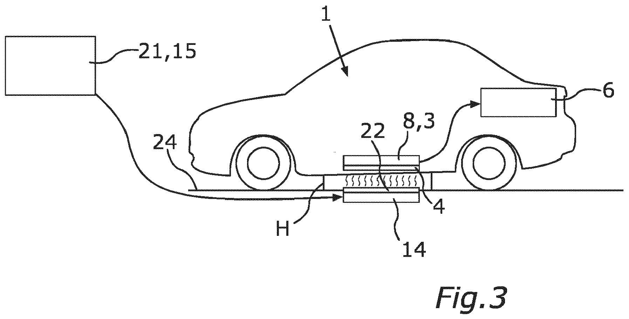

Fig. 3 shows a schematic illustration of an embodiment of the inventive vehicle. The electromagnetic transformer element 3 of the vehicle 1 may be placed in the alternative position 8. In the alternative position 8 the outer contact surface 4 of the electromagnetic transformer element 3 may face to the bottom of the vehicle 1. When the electromagnetic transformer element 3 is placed in the alternative position 8, it is possible to charge the battery 6 by an alternating magnetic field H, provided by the electromagnetic transformer supply element 14 of the supply unit 15, wherein the supply contact surface 22 is parallel to the road surface 24.

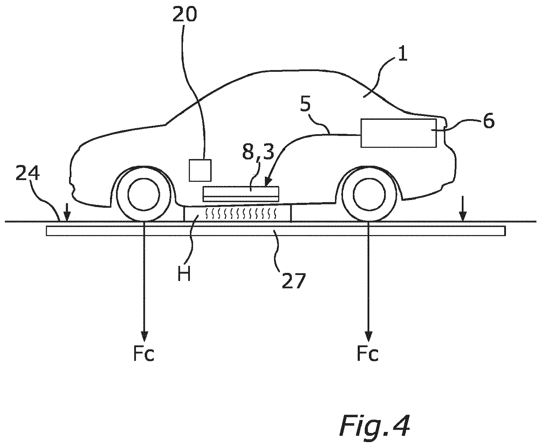

Fig. 4 shows a schematic illustration of an embodiment of the inventive vehicle. The electromagnetic transformer element 3 of the vehicle 1 may be situated in the alternative position 8. The surface sensor 20 may recognise that a ferrous plate or rod 27 is under the road surface 24. The charging system 2 may energise the electromagnetic transformer element 3 to generate the magnetic field H using energy of the battery 6. The magnetic field H may cause a contact force FC pushing the vehicle 1 to the surface 24.

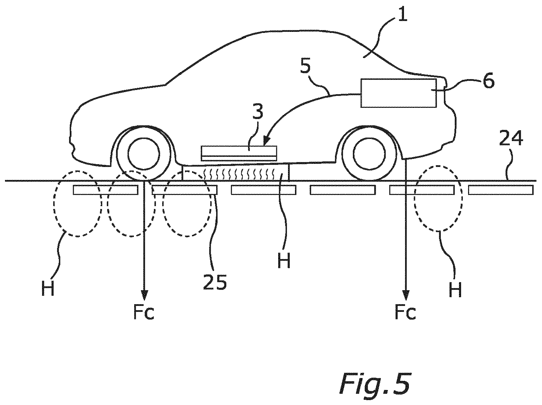

Fig. 5 shows a schematic illustration of an embodiment of the inventive vehicle. Figure 5 shows a situation, similar to Fig. 4, wherein the charging system 2 is used to provide the contact force FC, by generating the magnetic field H. The magnetic field H may interact with surface coils 25, placed in the surface 24. The surface coils 25 in front of the vehicle 1 and under the vehicle may be active to generate the magnetic field H. The coils 25 behind the vehicle 1 may be inactive.

From moving the same the coil under the car two other advantages can arise:
Increase contact between the tires and the road on the icy or slippery portions of the road. To achieve this advantage the coil shall be moved actively under the car during the driving cycle and on these portions of the rod, under it, to place some magnetic elements (ferrous plates or active coils).
When the car is above these elements and the car coil is energized, the car is pull towards the road surface increasing the friction forces. This will reduce the risk the car will slip out of the road.

Active traction of the car by coils placed under the road. The idea is to place active coils under some road parts, which are energized in a sequence and active pull the car using the attraction force between them and the car coil. These coils can be places on the road parts, which requires greater energy consumption and can be detected by the car by the induced current in the coil.

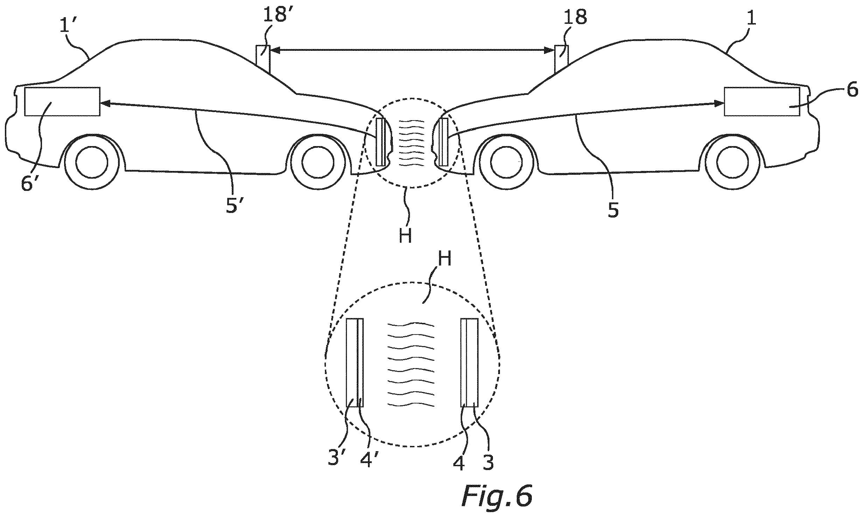

Fig. 6 shows a charging process, performed by two inventive vehicles. Each vehicle 1, 1' may comprise a battery 6, 6' and a charging system 2, 2'. The two vehicles 1, 1' may communicate, using the communication devices 18, 18'. The communication can be based on the basis on LTE or Wi-Fi. During the communication process, the vehicle 1 may offer energy to the other vehicle 1' . The vehicles 1, 1' may arrange in predefined positions. The first vehicle 1 may use energy of its battery 6 to generate the alternating magnetic field H, which may be received by the second vehicle 1' to charge its battery 6'.

The electromagnetic transformer elements 3,3' may act as a pre-airbag in case two vehicles 1, 1' with frontal coils are involved in frontal impact accident. By energizing both coils in the same sense there could be created an opposing magnetic force which will decelerate both cars just before the crash. This will not replace airbag, but it could be included in the factors which reduce the shock: deformable car body, airbag and seat belt. The magnetic force will act just before cars bodies impact.

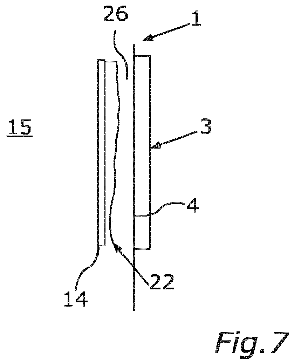

Fig. 7 shows a schematic illustration of the supply unit. The supply unit 15 may comprise the electromagnetic transformer supply element 14 with the supply contact surface 22. The shock absorbing element 26 may be placed around the electromagnetic transformer supply element 14 in order to protect the supply unit from damage during the charging process. During charging, the outer contact surface 4 of the electromagnetic transformer element 3 of the vehicle 1 may be arranged face to face to the supply contact surface 22.

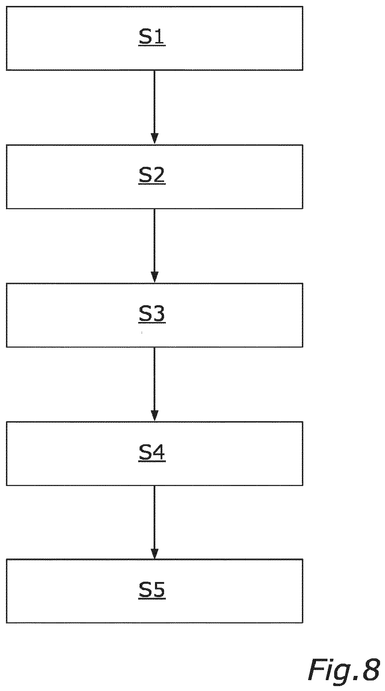

Fig. 8 shows a schematic illustration of the method for charging a vehicle with charging system. In a first step S1 the control unit 12 of the vehicle may drive the vehicle 1 to the predefined charging position 30 related to the supply electromagnetic transformer element 14 of the supply unit 15 outside the vehicle 1. In a second step S2, the supply unit 15 may provide the alternating magnetic field H at the at least one supply contact surface 22 of the electromagnetic transformer supply element 14, wherein the at least one supply contact surface 22 may face towards a horizontal direction. In a step S3, the vehicle 1 may receive the alternating magnetic field H at the at least one outer contact surface 4 of the electromagnetic transformer element 3. The at least one outer contact surface 4 may be oriented towards a forward f or rearward r driving direction of the vehicle 1. In a step S4, the charging voltage VC may be induced by the alternating magnetic field H in the electromagnetic transformer element 3 of the vehicle. In a last step S5 the battery 6 of the vehicle to may be charged by the charging circuit 5 by means of the charging voltage VC.

Overall, the example shows how an efficient inductive charging system is provided by the invention.

The innovation proposal is intended to be used in electric cars and it is related to coil used to charge the battery using the induction charging method for transferring power or additional tasks.

These days there are some products on the market which use under the car (vehicle) coils. In these products, the supply equipment induces an electromagnetic field in order to transfer energy required for battery charging. Usually these charging stations use one coil placed on or under the floor (horizontally) which it induces the electromagnetic filed in one coil placed under the car (horizontally). In order that the induction process to be energy efficient, the gap between the car and supply equipment coils shall be very small (<15cm), which it requires some limitations to the under the car gap height.

Also the horizontal alignment of the coils requires some advanced equipment/driver skills to guide the driver in order to match the correct final position (left/right and front/rear) . The magnetic field is induced efficient, if the matching is below 10cm.

Additional requirements are mandatory to monitor the gap between the coils as there is a strong magnetic field. One way is to monitor the living objects which can be affected (e.g.: a cat or baby) and additionally to monitor the metallic objects which can become hot in electromagnetic field (e.g.: a can or a coin).

The available solutions on the market try to deal with all of the above requirements which increase the system complexity and also the cost.

Also the coil (electromagnetic transformer element) is used just for induction charging.

The main problem of the state of the art consists of:
- limitation of under the car height gap for high induction efficiency. This will restrict the car type on which the system can be installed
- additional piece of HW for horizontal alignment as the coils are under the car, invisible for the driver. Additional guidance equipment to match the correct position is necessary, which it results in higher price and complex piece of HW
- air gap monitoring in between coils gap is very important. The surveillance of these area requires expensive equipment as radars, capacitive sensors, electromagnetic sensor
- the coil is used just for charging, but it can be used for additional tasks so until now it is not used at full capacity

All of the above enumerated issues:
- limitations of under the car height gap
- additional equipment to guide the driver
- air gap monitoring
- versatility of coil usage

The advantages of the invention are:
- better magnetic coupling between car and supply equipment coil, which it will increase the energy transfer efficiency
- no additional equipment is necessary to guide the driver to the charging coil as they are visible to the driver (in front of the car)
- no air gap monitoring necessary as the car and supply equipment coils are vertically (almost nothing can "stand" on them), visible to the driver and touch each other. So the intention is that there is no air gap in between them (eventually the supply coil contains an elastic surface which makes it possible that the coils "touch" each other) the same coil is used for additional things like: magnetic pre airbag, accident avoidance, traction and friction help.

## Claims

1. Vehicle (1) with a charging system (2)
- comprising an electromagnetic transformer element (3), designed to generate a charging voltage (VC) from an alternating magnetic field (H), wherein the magnetic field (H) is received at at least one outer contact surface (4), and
- comprising a charging circuit (5) that is designed to charge a battery (6) of the vehicle by means of the charging voltage (VC), **characterized in that** the at least one outer contact surface (4) is facing in a forward (f) or rearward (r) driving direction of the vehicle (1).

2. A vehicle (1) as claimed in claim 1, **wherein** the charging system (2) comprises a positioning unit (7), designed to move the electromagnetic transformer element (3) to an alternative position (8) inside the vehicle (1).

3. A vehicle (1) as claimed in claim 2, **wherein** the positioning unit (7) is designed to move the electromagnetic transformer element (3) in a translatory direction (9).

4. A vehicle (1) as claimed in claim 2 or 3, **wherein** the positioning unit (7) is designed to move the electromagnetic transformer element (3) rotationally around a horizontal axis (10) .

5. A vehicle (1) as claimed in claim 4, **wherein** the at least one outer contact surface (4) is facing towards a downward direction (11) of the vehicle, when the electromagnetic transformer element (3) is arranged in the alternative position (8) .

6. A vehicle (1) as claimed in any preceding claim, **wherein** the charging system (2) comprises a control unit (12) designed to drive the vehicle (1) to a predefined charging position (13) related to an electromagnetic transformer supply element (14) of a supply unit (15) outside the vehicle (1).

7. A vehicle (1) as claimed in any preceding claim, **wherein** the charging system (2) comprises a shock absorbing element (16) in front of the at least one outer contact surface (4).

8. A vehicle (1) as claimed in any preceding claim, **wherein** the vehicle (1) comprises a mechanical interlocking unit (17), designed to interlock the vehicle (1) to a supply unit (15).

9. A vehicle (1) as claimed in any preceding claim,
**wherein** the charging system (2) is designed to provide an alternating or constant magnetic field (H) from a supporting voltage provided by the battery (6) at the at least one outer contact surface (4) in dependence on a trigger signal.

10. A vehicle (1) as claimed in any preceding claim,
**wherein** the charging system (2) comprises a communication device (18) designed to coordinate a charging process with another vehicle.

11. A vehicle (1) as claimed in claim 10,
**wherein** the charging system (2) comprises a vehicle detector (19) to detect another vehicle, wherein the charging system (2) is designed to provide a constant magnetic field (H) in reverse to a constant magnetic field (H) of the other vehicle, when the other vehicle is approaching from a predefined direction and/or with a predefined speed.

12. A vehicle (1) as claimed in any preceding claim,
**wherein** the charging system (2) comprises a road surface sensor (20) designed to determine a type of road surface (24), wherein the charging system (2) is designed to provide a magnetic field (H) when the vehicle (1) is situated on a predefined type of road surface.

13. Supply unit (15) comprising an electromagnetic transformer supply element (14), designed to generate an alternating magnetic field (H), wherein the magnetic field (H) is provided at at least one supply contact surface (22), **characterized in that** the at least one supply contact surface (22) is facing towards a horizontal direction.

14. Method for charging a vehicle (1) with a charging system comprising (2) the steps of:
- driving the vehicle (1) to a predefined charging position (13) related to a electromagnetic transformer supply element (14) of a supply unit (15) outside the vehicle (1) by a control unit (12) of the vehicle (S1),
- providing an alternating magnetic field (H) at at least one supply contact surface (22) by an electromagnetic transformer supply element (14), wherein the at least one supply contact surface (22) is facing in a horizontal direction (S2),
- receiving the alternating magnetic field (H) at at least one outer contact surface (4) of an electromagnetic transformer element (3) of the vehicle (1), wherein the at least one outer contact surface (4) is facing towards a forward (f) or rearward (r) driving direction of the vehicle (S3),
- generating a charging voltage (VC) from the alternating magnetic field (H) by the electromagnetic transformer element (3) (S4), and
- charging a battery (6) of the vehicle (1) by a charging circuit (5) by means of the charging voltage (VC) (S5).
